(19) Europäisches Patentamt
European Patent Office
Office européen des brevets

(11) **EP 4 628 854 A1**

(12) **EUROPÄISCHE PATENTANMELDUNG**

(43) Veröffentlichungstag:
**08.10.2025 Patentblatt 2025/41**

(21) Anmeldenummer: **25167625.0**

(22) Anmeldetag: **01.04.2025**

(51) Internationale Patentklassifikation (IPC):
**G01F 23/296** (2022.01)   **G01F 23/2962** (2022.01)
**G01F 23/80** (2022.01)   **G06N 20/00** (2019.01)

(52) Gemeinsame Patentklassifikation (CPC):
**G01F 23/296; G01F 23/2962; G01F 23/802;
G06N 3/08; G06N 5/01; G06N 20/00; G06N 20/10;
G06N 20/20**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **03.04.2024 DE 102024109324**

(71) Anmelder: **Hochschule Trier, Körperschaft
des öffentlichen Rechts
54293 Trier (DE)**

(72) Erfinder:
• **Cetkin, Berkay
55768 Hoppstädten-Weiersbach (DE)**
• **Ueding, Kristof
55768 Hoppstädten-Weiersbach (DE)**
• **Dartmann, Guido
55768 Hoppstädten-Weiersbach (DE)**

(74) Vertreter: **Durm Patentanwälte PartG mbB
Patentanwälte
Moltkestrasse 45
76133 Karlsruhe (DE)**

(54) **VORRICHTUNG, SYSTEM UND VERFAHREN ZUM ERKENNEN DES FÜLLGRADS EINES BEHÄLTERS**

(57)   Eine Vorrichtung (10) zum Erkennen des Füllgrads eines mit einem Stoff gefüllten Behälters (40), hat eine Verarbeitungseinheit (50) mit einem Microcontroller (52); einen Signalgenerator (58) zum Generieren eines Speisesignals zum Speisen einer Signalquelle (54); eine akustische Signalquelle (54) zum Aussenden eines akustischen Sendesignals im hörbaren Bereich, das auf dem von dem Signalgenerator (58) erzeugten Speisesignal basiert; einen Signalempfänger (60) zum Empfangen eines akustischen Empfangssignals; und eine Speichereinheit (64) zum Zwischenspeichern des Sendesignals und/oder des Empfangssignals. Der Signalgenerator (58) ist dazu ausgebildet, um ein Sinussignal in einem vorgegebenen Frequenzbereich zu erzeugen. Die Verarbeitungseinheit (50) ist dazu ausgebildet, um aus dem Empfangssignal und dem Sendesignal die Raumimpulsantwort zu berechnen und damit den Füllgrad des Behälters (40) zu bestimmen. Die Bestimmung des Füllgrads basiert auf Klassifikationsdaten eines Machine-Learning-Modells (22) einer KI-Einheit (20).

Fig. 1

**Beschreibung**

Die vorliegende Erfindung betrifft eine Vorrichtung zum Erkennen des Füllgrads eines mit einem Stoff gefüllten Behälters. Sie umfasst eine Verarbeitungseinheit mit einem Microcontroller, einen Signalgenerator zum Generieren eines Speisesignals zum Speisen einer Signalquelle und eine akustische Signalquelle zum Aussenden eines akustischen Sendesignals im hörbaren Bereich. Sie umfasst weiter einen Signalempfänger zum Empfangen eines akustischen Empfangssignals.

Die Bestimmung des Füllgrads oder Füllstands eines Behälters, der mit einem Stoff wenigstens teilweise gefüllt ist, ist in vielen technischen Bereichen aber auch im öffentlichen Leben eine häufig anzutreffende Aufgabe, die möglichst effizient bearbeitet werden soll. Insbesondere spielt die Bestimmung des Füllgrads von Abfallbehältern eine große Rolle, genauso wie die Bestimmung des Füllstands von Transportbehältern oder Flüssigkeitsbehältern.

Die DE 10 2009 055 262 A1 schlägt ein Verfahren zur Erfassung des Füllstands eines Mediums in einem Behälter vor. Dabei wird ein Verfahren basierend auf Laufzeitmessungen angewandt, mit dem der Abstand zwischen einem Sensor und einer zweidimensionalen Oberfläche des Mediums gemessen und daraus der Füllstand ermittelt wird. Es erfordert damit eine möglichst homogene Oberfläche des Mediums. Auch die WO 2022/233596 A1 ermittelt den Füllstand von Flüssigkeiten mittels Laufzeitmessungen von Reflexionen an der Oberfläche der Flüssigkeiten. Die US 2022/0299354 A1 betrifft ebenfalls eine Vorrichtung, ein System und ein Verfahren zur Ermittlung des Füllstands eines Fluids in einem Container, bei dem eine Klassifikation und eine Regression zur Ermittlung des Füllstands kombiniert werden. Auch dieses System beruht auf Laufzeitmessungen und einer anschließenden Frequenzanalyse.

Die Abfallbewirtschaftung steht zunehmend vor der Herausforderung, dass immer größere Abfallmengen anfallen, die die Kapazitäten der Stadtverwaltungen übersteigen. Diese Situation bietet unter anderem Möglichkeiten für Lösungen und die Einführung neuer Technologien und Methoden zur Abfallverringerung und -umwandlung. Im Bereich der Abfallbewirtschaftung werden traditionelle Praktiken durch intelligentere und effizientere Lösungen ersetzt. Durch den Einsatz neuer Techniken können Abfallmanagementsysteme inzwischen Abfallerzeugungsmuster vorhersagen, Sammelrouten optimieren und Recyclingprozesse verbessern. Diese Integration von Technologien verbessert nicht nur die betriebliche Effizienz, sondern trägt auch erheblich zur ökologischen Nachhaltigkeit bei. Insbesondere ließen sich Sammelrouten optimieren, wenn der Füllgrad der einzelnen Abfallbehälter bekannt wäre und ein unnötiges Leeren vermieden werden könnte.

Folglich besteht ein hoher Bedarf, den Füllstand eines Behälters, insbesondere eines Abfallbehälters, zu erkennen. Die Erkennung sollte auf einfache und kostengünstige Weise erfolgen und nachrüstbar sein.

Gelöst wird die vorliegende Aufgabe durch eine Vorrichtung mit den Merkmalen des Anspruchs 1, mit einer KI-Einheit mit den Merkmalen des Anspruchs 10, mit einem System mit den Merkmalen des Anspruchs 13 sowie mit einem Verfahren mit den Merkmalen des Anspruchs 15.

In einem Aspekt betrifft die vorliegende Erfindung eine Vorrichtung zum Erkennen des Füllgrads eines mit einem Stoff gefüllten Behälters, mit einer Verarbeitungseinheit mit einem Microcontroller, einem Signalgenerator zum Generieren eines Speisesignals zum Speisen einer Signalquelle, einer akustischen Signalquelle zum Aussenden eines akustischen Sendesignals im hörbaren Bereich, das auf dem von dem Signalgenerator erzeugten Speisesignal basiert. Die Vorrichtung hat einen Signalempfänger zum Empfangen eines akustischen Empfangssignals und eine Speichereinheit zum Zwischenspeichern des Sendesignals und/oder des Empfangssignals. Das Empfangssignal basiert auf einer isolierten Impulsantwort, die Basis der Raumimpulsantwort des Behälters und seines Füllgrads ist. Der Signalgenerator ist dazu ausgebildet, um ein Sinussignal in einem vorgegebenen Frequenzbereich zwischen 20 Hz und 20 kHz zu erzeugen und zur Abgabe an die Signalquelle zu übermitteln. Die Verarbeitungseinheit, die eine Steuer- und Auswerteeinheit umfassen kann, ist dazu ausgebildet, um aus dem Empfangssignal und dem Sendesignal den Füllgrad des Behälters zu bestimmen. Dabei basiert die Bestimmung des Füllgrads auf Klassifikationsdaten eines Machine-Learning-Modells einer KI-Einheit. Die KI-Einheit kann in der Vorrichtung, bevorzugt in der Verarbeitungseinheit der Vorrichtung integriert sein.

In einem weiteren Aspekt betrifft die Erfindung eine KI-Einheit mit einem Machine-Learning-Modell, das wenigstens einen, vorzugsweise mehrere, Schätzer in Form von Entscheidungsbäumen umfasst. Die KI-Einheit ist dazu ausgebildet, um in oder mit einer oben beschriebenen Vorrichtung verwendet zu werden. Die KI-Einheit ist zur Klassifikation von Eingangswerten eingerichtet, die die Raumimpulsantwort eines Behälters repräsentieren und damit umfangreiche Informationen über den Innenraum des Behälters umfassen. Dabei wird das Machine-Learning-Modell zur Klassifikation der Eingangswerte verwendet. Das Machine-Learning-Modell beruht darauf, dass für jeden Schätzer ein Zufalls-Intervall variabler Länge zufällig in einem Indexbereich der Eingangswerte sowie ein Fix-Intervall derselben Länge definiert werden, die stets am Beginn des Indexbereichs der Eingangswerte liegen. Aus dem Zufalls-Intervall werden die Magnitude des Frequenzspektrums sowie das Verhältnis von Minimalwert zu Maximalwert zur Klassifikation der Eingangswerte berücksichtigt. In dem Fix-Intervall werden eine Standardabweichung und ein Mittelwert zur Klassifikation berücksichtigt. Dabei werden insbesondere die Differenzen zwischen benachbarten Werten des Intervalls gebildet und daraus der Mittelwert und die Standardabweichung für die Klassifikation verwendet. Die KI-Einheit kann bevorzugt für die Verarbeitung von akustischen Empfangssignalen, also Schallsignalen, eingesetzt werden, beispielsweise um den Füllgrad oder Füllstand in einem Behälter, wie etwa einem Abfallbehälter, zu ermitteln.

In einem weiteren Aspekt betrifft die Erfindung ein System zur Erkennung des Füllgrads in einem Behälter, umfassend eine Vorrichtung wie oben beschrieben und einen Behälter, wobei wenigstens Teile der Vorrichtung an einer Innenseite oder einem Rand des Behälters angeordnet sind. Das System und/oder die Vorrichtung kann eine Energiequelle, beispielsweise in Form einer Batterie oder eines Akkus, umfassen, was das System autark macht. Der Behälter kann einen Deckel aufweisen, an dessen Innenseite bevorzugt die Vorrichtung angebracht wird, so dass die Komponenten für die akustische Analyse im Behälter angeordnet sind.

Weitere Aspekte der Erfindung betreffen ein entsprechendes Verfahren und ein Computerprogrammprodukt mit Programmcode zum Durchführen der Schritte des Verfahrens, wenn der Programmcode auf einem Computer ausgeführt wird, sowie ein Speichermedium, auf dem ein Computerprogramm gespeichert ist, das, wenn es auf einem Computer ausgeführt wird, eine Ausführung des hierin beschriebenen Verfahrens bewirkt.

Bevorzugte Ausgestaltungen der Erfindung werden in den abhängigen Ansprüchen beschrieben. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere können das Verfahren und das Computerprogrammprodukt entsprechend der für die Vorrichtung in den abhängigen Ansprüchen beschriebenen Ausgestaltungen ausgeführt sein.

Erfindungsgemäß wird der Füllgrad eines Behälters, der wenigstens teilweise mit einem Stoff gefüllt ist, basierend auf akustischen Signalen erkannt. Die Signale können im hörbaren Frequenzbereich liegen. Ein Sinussignal, insbesondere ein Sinusimpuls, oder eine Folge von Sinussignalen, etwa in Form eines Sinus-Sweeps, wird von einem Generator erzeugt und als akustisches Signal von einer Schallquelle, Lautsprecher oder Buzzer in den Behälter abgegeben. Hierbei können handelsübliche einfache Standard-Lautsprecher eingesetzt werden. Zum Empfang eignen sich einfache Standard-Mikrofone. Das vom Behälter in Abhängigkeit seines Füllstands erzeugte Antwort- bzw. Empfangssignal basiert auf der Raumimpulsantwort des Behälters und wird von einem Empfänger in Form eines Mikrofons aufgenommen. Aus dem Sendesignal und dem Empfangssignal wird die Raumimpulsantwort berechnet, welche Informationen über die Schallreflexion und den Nachhall im Behälter enthält. Dadurch entsteht ein umfassendes (3D-)Bild sowohl des Behälters als auch seines Füllstands oder Füllgrads. Hieraus wird der Füllstand ermittelt, wobei die Ermittlung auf Klassifikationsdaten einer KI-Einheit beruht.

Aus der Anregung und der Impulsantwort wird in der Vorrichtung der Füllstand ermittelt, wobei die Ermittlung auf Klassifikationsdaten einer KI-Einheit beruht. Die Klassifikationsdaten werden bevorzugt mittels Trainingsdaten in der KI-Einheit erzeugt, die wenigstens ein Machine-Learning-Modell umfasst. Die Trainingsdaten umfassen die aus dem Empfangssignal und Sendesignal berechnete Impulsantwort bzw. Raumimpulsantwort RIR des Behälters. Zusätzlich können sie einen Füllgrad in einem Behälter umfassen. Somit kann eine akustische Klangklassifikation durchgeführt werden, die diese Daten berücksichtigt.

Das Machine-Learning-Modell kann nicht nur beim Training verschiedene Merkmale der akustischen Signale und/oder der Raumimpulsantwort berücksichtigen, wie Intensität oder Frequenz, um den Füllstand des Behälters zu schätzen. Vielmehr besteht bevorzugt die Möglichkeit, auch während des Einsatzes der Vorrichtung die Qualität und Güte der Vorhersage und Einschätzung des Füllgrads in dem Behälter zu verbessern, in dem das Machine-Learning-Modell mit den erfassten Daten versorgt wird und eine Rückmeldung zum tatsächlichen Füllgrad des Behälters durch einen Benutzer gegeben wird. Es kann also bevorzugt neben einer lokalen Klassifizierung von Behältern auf der Grundlage von Schallanalysen auch ein lokales Training, also Training vor Ort im Behälter, durchgeführt werden. Dies gilt insbesondere und bevorzugt, wenn das Machine-Learning-Modell und/oder die KI-Einheit in die erfindungsgemäße Vorrichtung integriert ist, beispielsweise in die Verarbeitungseinheit der Vorrichtung.

Die Klassifikationsdaten können auch unterschiedliche Bereiche umfassen. So ist es möglich, dass unterschiedliche Füllgrade in Kategorien unterteilt werden. Es könnten beispielsweise die Zustände "Leer", entsprechend 0 % Füllung oder nahezu 0 %, "Viertel" entsprechend höchstens 25 % Füllung, "Halb", höchstens 50 % Füllung, "Dreiviertel" (75 % Füllung) und "Voll" entsprechend bis 100 % Füllung als Kategorie verwendet werden. Der Füllgrad könnte in Form dieser oder ähnlicher Kategorien angegeben werden. Auch könnte "Voll" bereits bei einem Füllgrad von mehr als 90 % angegeben werden. Die Klassifikationsdaten beruhen stets auf der Raumimpulsantwort.

Die Erfindung ermöglicht es, eine berührungslose Messung des Füllstands in dem Behälter durchzuführen, wodurch der Verschleiß der Komponenten verringert und die Lebensdauer der Vorrichtung erhöht werden. Die Vorrichtung ist auch sehr robust und energieeffizient. Sie ist darüber hinaus sehr kostengünstig, da lediglich einfache und preiswerte Komponenten verwendet werden können. Somit lässt sich die Vorrichtung beispielsweise in großen Stückzahlen in Abfallbehältern einsetzen. Die Vorrichtung kann auf verschiedene Arten von Füllstandsmessungen angewendet werden, einschließlich Feststoffe in Abfallbehältern, Flüssigkeitsbehälter oder Schüttgutbehälter, indem das Machine-Learning-Modell entsprechend angepasst wird.

Die vorliegende Erfindung ermöglicht die Klassifizierung und Analyse der Raumimpulsantwort (RIR), die sich aus der Schallausbreitung in einem Behälter ergibt, und eine präzise und - im Gegensatz zu herkömmlichen Verfahren - unabhängige Füllstandsmessung, weitgehend unabhängig von den spezifischen Eigenschaften oder der Art des Inhalts, also des Stoffes, im Behälter.

Damit wird beispielsweise im Gegensatz zu elektromagnetischen Signalen, die durch die Eigenschaften des Behälterinhalts in Bezug auf dessen Dielektrizität oder Leitfähigkeit beeinflusst werden, eine robuste und unabhängige Messung durchführbar. Die erfindungsgemäße Messung ist universell und anpassungsfähig, wobei das maschinelle Lernmodell gegebenenfalls angepasst werden kann, um auf unterschiedliche Anwendungen abgestimmt zu werden und um das System effizient und zukunftssicher zu gestalten.

Das System und die Vorrichtung lassen sich insbesondere bei der Müllentsorgung einsetzen. So kann die Vorrichtung in den Müllbehälter oder Abfallbehälter der Müllentsorgungsunternehmen, beispielsweise der städtischen Abfallentsorgung, installiert werden. Das System kann Müllbehälter mit Deckel als Behälter umfassen.

Im Gegensatz zu üblichen Verfahren, die häufig die Distanz zwischen einem Sensor und der Oberfläche des Materials messen und beispielsweise Ultraschall-, Radar- oder Laser-gestützte Laufzeitmessungen sind, wird mittels der Raumimpulsantwort das gesamte Innenleben des Behälters berücksichtigt. Die Raumimpulsantwort beschreibt, wie der Behälter mit seinen Wänden, Inhalt und anderen Einbauten auf ein akustisches Sendesignal reagiert. Das Sendesignal kann ein Sinussignal oder ein Sinus-Sweep im Frequenzbereich von 20 Hz bis 20 kHz oder in einem Teilbereich davon sein und wird beispielsweise mittels eines Lautsprechers in den Innenraum des Behälters abgegeben. Dieses akustische Signal wird im Behälter reflektiert, absorbiert, gestreut und verändert, je nachdem wie die Wände und das Füllmaterial bzw. der Inhalt beschaffen sind. Es wird als Empfangssignal mit einem Mikrofon gemessen und umfasst das akustische Profil des gesamten Behälters. Aus den Empfangssignalen des Sinus-Sweeps (Sendesignal) lässt sich folglich die gesamte Raumimpulsantwort ermitteln. Die Raumimpulsantwort wird bevorzugt zunächst aus dem aufgenommenen Empfangssignal und dem ausgesendeten Signal - also dem Sinus-Sweep - berechnet. Sie repräsentiert folglich das akustische Profil des Behälters im durch den Sinus-Sweep definierten Frequenzbereich.

Während bei typischen Laufzeitmessungen lediglich der Abstand zwischen Sensor und Oberfläche des Füllguts gemessen und eine weitergehende Beschreibung des Innenraums nicht stattfindet, wird erfindungsgemäß mit der Analyse der Raumimpulsantwort die gesamte Innengeometrie des Behälters erfasst und das Spektrum an Reflexionen, Streuungen und Absorptionen vollständig berücksichtigt und in der Raumimpulsantwort abgebildet. Auf diese Weise wird das dreidimensionale Verhalten des Schalls im Behälter charakterisiert. Es findet somit keine zweidimensionale Betrachtung statt, sondern eine vollständige dreidimensionale Erfassung des Innenraums.

Die Verarbeitung der Raumimpulsantwort bietet die Möglichkeit deutlich feinere Unterschiede der Behälterfüllung zu ermitteln als mit Laufzeitmethoden. Gerade in komplexen Behältern, die nicht nur eine einfache, plane Oberfläche des Füllguts aufweisen, ermöglicht die Raumimpulsantwort eine präzisere Erfassung von Zuständen. Selbst komplexe Strukturen wie Einbauten, Rührwerke oder unregelmäßige Füllverteilungen können analysiert werden, da ihre Reflexionsbeiträge in der Raumimpulsantwort sichtbar werden. Zudem ist die Verarbeitung der Raumimpulsantwort deutlich robuster gegenüber lokalen Unregelmäßigkeiten. Bei klassischen Laufzeitmessungen können Instabilitäten oder ungenau definierte Oberflächen (z. B. Schaum oder Kanten) zu Messfehlern führen. Die Raumimpulsantwort charakterisiert dagegen den gesamten Raumeindruck. Lokale Anomalien oder Unregelmäßigkeiten wirken sich somit sehr viel geringer auf das Gesamtergebnis aus.

Die Verwendung von hörbaren Frequenzen bis 20 kHz sind im Vergleich zu Verfahren, die auf Ultraschallsignalen beruhen, weniger anfällig gegenüber Dämpfungsverlusten. Ultraschallsignale (> 20 kHz) werden stärker gedämpft, da die Wellenlänge kürzer ist. Sie unterliegen einer stärkeren frequenzabhängigen Schallabsorption und weisen eine höhere Absorption und Streuung auf, besonders bei langen Ausbreitungswegen oder in viskosen Medien. Da hörbare akustische Signale geringere Dämpfungsverluste haben, können längere Ausbreitungswege realisiert werden, was auch zu einer stabileren Signalauswertung selbst in Behältern mit komplexen Oberflächen führt.

Die vorliegende Erfindung hat den weiteren Vorteil, dass als akustische Komponenten Lautsprecher und Mikrofone eingesetzt werden können, die für hörbare Frequenzen kostengünstig und einfach integrierbar sind. Hochspezialisierte Ultraschallwandler entfallen. Die Systemkosten können im Vergleich deutlich reduziert werden. Die weniger komplexe Hardware ist nicht nur weniger anfällig gegenüber technischen Ausfällen und Defekten, einfacher in Wartung und Instandhaltung, minimiert Kompatibilitätsprobleme und reduziert gleichzeitig das Risiko von Bedienungsfehlern. Zudem ist die Empfindlichkeit gegenüber Verschmutzungen im hörbaren Frequenzbereich bei etwaigen Verschmutzungen oder Anlagerungen auf Wandler oder Mikrofon geringer als bei Ultraschallmessungen. Gleiches gilt im Vergleich zu Messungen, die auf elektromagnetischen Wellen beruhen, insbesondere erfolgt hier eine gerichtete Messung zwischen einer Oberfläche und dem Empfänger.

Die vorliegende Erfindung bietet also die folgenden Vorteile:

- Kostengünstige Hardware: Es können handelsübliche, einfache, kostengünstige Lautsprecher und Mikrofone eingesetzt werden, was einen Einsatz mit großen Stückzahlen ermöglicht, beispielsweise bei der städtischen Müllentsorgung.

- Keine Beschränkung auf die Messung von Oberflächen und deren Höhe, stattdessen Analyse des gesamten Raums.

- Robustheit gegenüber wechselnden Oberflächenzuständen: Selbstwenn das Füllmaterial im Behälter stark schwankt (z. B. durch Rührwerke, Schaum, unterschiedliche Schüttdichten), bleibt die gesamte Raumimpulsantwort aussagekräftig, da sie nicht nur den Abstand zur Oberfläche berücksichtigt.

- Erfassung von Hohlräumen oder Schichtungen: Auch mehrschichtige Füllungen (z. B. unterschiedliches Material in einem Behälter) erzeugen typische Muster in der Impulsantwort, so dass die Vorrichtung auch für diese Zwecke eingesetzt und auf die unterschiedlichen Füllungen trainiert werden kann. Das System ist somit auch für komplexere Anwendungsfälle nutzbar.

- Verschiedene Behältergeometrien: Durch die dreidimensionale Betrachtung sind komplexe Innenstrukturen (Silos mit Konus, Tanks mit Einbauten, unregelmäßige Formen) kein Hindernis. Anders als reine Laufzeitverfahren, die auf eine eindeutige Reflexionsfläche angewiesen sind, wird mit der Raumimpulsantwort ein ganzheitliches Profil berücksichtigt.

- Im hörbaren Frequenzbereich wirken sich Verschmutzungen auf Wandler oder Mikrofon in der Regel weniger stark aus als bei Ultraschallwandlern.

- Große Anpassbarkeit an verschiedene Materialien: Aufgrund der frequenzabhängigen Reflexions- und Absorptionseigenschaften kann das System sowohl für flüssige als auch für feste Materialien (Granulate, Pulver, Mischformen) trainiert und eingesetzt werden.

- Zuverlässigkeit und Robustheit bei teilweiser Verdeckung oder Anhaftungen: Auch wenn Lautsprecher oder Mikrofon nicht völlig frei liegen (z. B. durch Verkrustungen oder Belag), liefert die breitbandige Raumimpulsantwort immer noch ausreichend Informationen für eine verlässliche Auswertung.

- Machine-Learning-gestützte Kalibrierung: Durch die ML-Methodik lassen sich anlagenspezifische Einflüsse (z. B. Einbauteile, turbulente Mischvorgänge) im Trainingsprozess berücksichtigen. Auf diese Weise ist eine individuelle Anpassung an wechselnde Betriebsbedingungen möglich.

- Langfristige Stabilität: Da die Raumimpulsantwort auf vielen Frequenzanteilen basiert und nicht nur ein einzelnes Echosignal auswertet, wirken sich Alterungseffekte (z. B. kleine Veränderungen der Behälterwand) kaum auf die Messgenauigkeit aus. Die relativ niedrige Frequenz des akustischen Signals bleibt robuster als hochfrequente Ultraschallsignale. Änderungen einzelner Frequenzen fallen kaum ins Gewicht.

Die vorliegende Erfindung beruht auf einem neuartigen Ansatz namens "Sonic Impulse Response Ensemble Classifier" (SIREC) zur (akustischen) Messung des Füllstands von Behältern oder Abfallbehältern. Diese Technik, die die Analyse der räumlichen Impulsantwort mit Methoden des maschinellen Lernens verbindet, stellt eine schnelle und effiziente Methode zur Kategorisierung, insbesondere des Füllgrads oder Füllstands in einem Behälter, dar. Die Bestimmung des Füllgrads und auch seine Kategorisierung basieren auf Klassifikationsdaten der Raumimpulsantwort eines Machine-Learning-Modells einer KI-Einheit. Diese wird bevorzugt mit Raumimpulsantworten von anderen oder ähnlichen Räumen oder bevorzugt mit Kalibrationsmessungen oder vorhergehenden Messungen trainiert und angelernt. Das Training und Anlernen können auch - wenigstens teilweise - vor Ort und im Betrieb erfolgen. Die KI-Einheit kann deshalb bevorzugt Teil der Vorrichtung sein und somit lokal am Behälter angeordnet sein. Die Arbeitsweise des SIREC-Systems ist beispielsweise in "Spatial impulse response analysis and ensemble learning for effcient precision level sensing"; Cetkin, et.al.; Discover Artificial Intelligence; 26.09.2024; https://doi.org/10.1007/s44163-024-00165-w beschrieben. Auf die Details wird verwiesen.

Da das SIREC-Modell aus einer Vielzahl an Reflexions- und Absorptionsmustern lernt, die durch die Raumimpulsantwort entstehen und dadurch - insbesondere in Verbindung mit Machine-Learning-Modellen - einen zusätzlichen Vorteil durch hohe Mustervielfalt bieten, können differenzierte Klassifikationen für verschiedene Füllstände oder Materialien vorgenommen werden. Die Ermittlung des Füllstands oder Füllgrads in den Behältern wird damit besonders genau und schnell.

Die Erfindung hat den Vorteil, dass ein Fingerprint des gesamten Behälters durch Auswertung der Raumimpulsantwort erstellt und eine detaillierte Aussage über den Füllgrad ermöglicht wird.

Die Raumimpulsantwort liefert umfassende zeit- und frequenzabhängige Signalinformationen, die die charakteristischen Merkmale des entsprechenden Raumes oder Behälters umfassen. Diese Vielfalt an Merkmalen bildet eine breite Datenbasis für ML-Modelle.

In einer bevorzugten Ausführungsform umfasst die Vorrichtung eine Kommunikationseinheit, um Daten mit anderen (externen) Geräten auszutauschen. Der Datenaustausch kann dabei bevorzugt drahtlos erfolgen. Prinzipiell ist so eine drahtgebundene Kommunikation möglich. Die externe Recheneinheit, mit der Daten ausgetauscht werden, kann beispielsweise ein Server, ein cloudbasierter Rechner, ein stationärer Rechner oder ein mobiles Endgerät sein, etwa ein Mobiltelefon oder ein Laptop. Die Daten können zu einer Applikation auf einem Mobiltelefon oder Mobilgerät übermittelt werden. Besonders bevorzugt wird die Kommunikationseinheit verwendet, um den ermittelten Füllgrad an die externe Recheneinheit zu übermitteln. Beim Einsatz der Vorrichtung in Müll- oder Abfallbehältern kann das externe Endgerät im oder am Fahrzeug der Müllentsorgung angeordnet sein und den Füllgrad der zu leerenden Behälter erkennen. Der Benutzer oder Müllwerker kann den Füllgrad z. B. auf seinem Mobiltelefon ablesen. Die Kommunikation zwischen Vorrichtung und externer Recheneinheit kann bidirektional sein, sodass auch Daten an die Vorrichtung übermittelt werden können. Beispielsweise kann bei einem von einem Benutzer erkannten Füllgrad der von der Vorrichtung ermittelte und geschätzte Füllgrad korrigiert werden. Auf diese Weise ist es möglich, dass das System auch während des Betriebs lernt.

Eine ebenso bevorzugte Ausführungsform der Vorrichtung sieht vor, dass die Klassifikationsdaten des Machine-Learning-Modells (ML-Modell) auf Trainingsdaten beruhen, mit denen die KI-Einheit gespeist und trainiert wurde. Die Trainingsdaten können verschiedene Merkmale der akustischen Signale umfassen, wie etwa Intensität oder Frequenz, um den Füllstand des Behälters zu schätzen. Diese Merkmale werden in dem Machine-Learning-Modell verarbeitet und verwendet. Die dabei erzeugten Klassifikationsdaten des Machine-Learning-Modells können bevorzugt in einer Speichereinheit, die ebenfalls Teil der Vorrichtung sein kann, gespeichert werden. Auf diese Weise können große Mengen an Klassifikationsdaten zur Verfügung gestellt werden. In einer bevorzugten Ausführungsform wird bei der Bestimmung des Füllgrads eine Transformation des Empfangssignals und des Sendesignals in den Frequenzbereich vorgenommen. Hier wird ein Ausgangssignal im Frequenzbereich bestimmt, das anschließend mittels einer Rücktransformation in den Zeitbereich rückgewandelt wird. Eine Verarbeitung der einzelnen Signale im Frequenzbereich hat sich als einfach erwiesen. Um die Transformation zwischen Zeitbereich und Frequenzbereich zu vollziehen, wird bevorzugt eine Fourier-Transformation und eine inverse Fourier-Transformation verwendet. Da die Signale in Form von Abtastwerten vorliegen und digitalisiert sind, können diskrete Fourier-Transformationen (DFT) bzw. diskrete inverse Fourier-Transformationen (DIFT) angewendet werden.

In einer bevorzugten Ausführungsform wird zunächst ein Rauschsignal aus der Umgebung erfasst und gemeinsam mit dem Empfangssignal in den Frequenzbereich transformiert, um das Rauschsignal anschließend in diesem Frequenzbereich vom zu analysierenden Empfangssignal abzuziehen. Bevorzugt wird bei der Verarbeitung also das Empfangssignal zunächst mit einem Rauschsignal der Umgebung beaufschlagt, vorzugsweise von dem Empfangssignal abgezogen, um störende Umwelteinflüsse zu kompensieren oder zu reduzieren. Dies erfolgt im Frequenzbereich. Das Rauschsignal kann bei einer Messung des Empfangssignals entstehen, ohne dass ein anregendes Sendesignal von der Signalquelle ausgesendet wird.

Die verwendeten Transformationsoperationen können auf einer Fast-Fourier-Transformation bzw. auf einer inversen Fast-Fourier-Transformation beruhen, die effizient ist und die benötigte Rechenzeit erheblich reduziert.

Das in der Verarbeitung verwendete Empfangssignal umfasst die Raumimpulsantwort, was der Impulsantwort eines linearen zeitinvarianten Systems (LTI-System) entspricht, wenn dieses mit einem Impuls beaufschlagt wird. Da auch das vorliegende System als LTI-System angesehen werden kann, kann ein Faltungsprozess verwendet werden, um eine Impulsantwort mit einem Eingangssignal zu kombinieren und ein Ausgangssignal zu erhalten. Ausgehend hiervon wird das Empfangssignal infolge von Schallreflexion und Nachhall in dem Behälter gebildet und durch einen kurzen Schallimpuls (Sendesignal) ausgelöst. Das Empfangssignal repräsentiert somit die Raumimpulsantwort (RIR). Die RIR umfasst alle relevanten Informationen über die akustischen Eigenschaften des Raums bzw. des Behälters und ermöglicht eine Analyse der Raumakustik.

Um die Raumimpulsantwort aus dem vom Signalempfänger empfangenen akustischen Empfangssignal zu extrahieren, wird ein Inversionsverfahren, auch Deconvolution genannt, angewendet. Dabei "entfaltet" man die Faltung des bekannten Sendesignals mit der unbekannten Raumimpulsantwort, deren Ergebnis das empfangene Signal ist. Mit dieser Umkehrung einer Faltungsoperation im Zeitbereich wird also eine unbekannte Raumimpulsantwort aus dem empfangenen Signal und dem bekannten Sendesignal abgeleitet. Da eine Faltung im Zeitbereich einer Multiplikation im Frequenzbereich entspricht, wird die "Entfaltung" durch eine Division im Frequenzbereich realisiert. Folglich wird das fouriertransformierte Empfangssignal durch das fouriertransformierte Sendesignal dividiert, um auf die Fouriertransformierte des Raumimpulsantwortsignals zu kommen. Durch Anwendung einer inversen Fourier-Transformation (IDFT oder IFFT) wird die Raumimpulsantwort im Zeitbereich ermittelt. Sie kann mittels des Machine-Learning-Modells klassifiziert werden, sodass eine Schätzung des Füllgrads in einem Behälter vorliegt. Insbesondere bei bekanntem Füllgrad des Behälters kann eine Kalibration, Zuordnung oder ein Training erfolgen, so dass die KI-Einheit mit Trainingsdaten ausgestattet werden kann.

Mathematisch lässt sich die Beziehung zwischen Sendesignal, empfangenen Signal (Eingangswert) und Raumimpulsantwort beschreiben durch:

$$y(t) \ = \ x(t) \ * \ h(t) \ = \ \int_{-\infty}^{\infty} h(\tau) \ \cdot \ x(t \ - \ \tau) \, d\tau \qquad \text{(Formel 1)}$$

Dabei sind *x(t)* das Sendesignal (Sinus-Sweep), *y(t)* das empfangene Signal, *h(t)* die Raumimpulsantwort und * der mathematische Operator der Faltung.

Idealerweise wäre das Sendesignal ein Dirac-Impuls, da dieser in der Frequenzanalyse (Fourier-Transformation) alle Frequenzen gleichzeitig abdecken und so unmittelbar die gesamte Raumimpulsantwort liefern würde. In der Praxis wird stattdessen bevorzugt ein Sinus-Sweep verwendet, der kontrolliert einen bestimmten Frequenzbereich kontinuierlich durchläuft (z. B. von 1400 Hz bis 2150 Hz). Der Sinus-Sweep lässt sich einfach technisch erzeugen und enthält genau die Frequenzen, die sinnvoll analysiert werden können. Er bietet somit eine kontrollierte Anregung des Behälters im definierten Frequenzbereich.

Die Raumimpulsantwort lässt sich durch Umkehrung der Faltung aus obiger Formel 1 berechnen. Dazu wird ein Übergang in den Frequenzbereich mittels Fourier-Transformation durchgeführt, so dass die Faltung als Multiplikation dargestellt werden kann.

$$H(f) = \frac{Y(f)}{X(f)} \qquad \text{(Formel 2)}$$

Durch Rücktransformation mittels inverser Fourier-Transformation (iFT) erhält man dann die Raumimpulsantwort *h(t)* im Zeitbereich. Sie bietet eine umfassende dreidimensionale Information über die akustischen Eigenschaften des Behälters. Jeder Füllstand erzeugt eine spezifische Veränderung dieser Antwort. Durch Einsatz des erfindungsgemäßen SIREC-Modells (Machine-Learning-Modell, ML-Modell) wird diese komplexe Information analysiert und der genaue Füllstand wird aus der Charakteristik der Raumimpulsantwort abgeleitet.

In einer bevorzugten Ausführungsform kann vor oder während der Bestimmung der Raumimpulsantwort bereits eine Vorverarbeitung der Signale stattfinden, bei der Hintergrundrauschen im Empfangssignal entfernt bzw. reduziert wird. Diese Verfahren kann eine spektrale Subtraktion umfassen.

In einer bevorzugten Ausführungsform umfasst die Vorrichtung ein Anzeigeelement, dass dazu ausgebildet ist, den ermittelten Füllstand oder geschätzten Füllgrad für einen Benutzer anzuzeigen. Vorzugsweise ist das Anzeigeelement an den Behälter angeordnet. Es kann ein Display oder eine Signalleuchte sein, um Füllgradkategorien farblich anzuzeigen, beispielsweise gelb für stark gefüllt, rot für voll. Das Anzeigeelement kann jedoch auch durch ein mobiles Gerät realisiert oder in einem mobilen Gerät integriert sein, um den Füllgrad anzuzeigen.

In einer bevorzugten Ausführungsform ist die Verarbeitungseinheit dazu ausgebildet, in einen Lernmodus zu schalten. In dem Lernmodus kann der Verarbeitungseinheit für eine berechnete Raumimpulsantwort ein vorgegebener oder vorbestimmter Füllgrad zugeordnet werden. Dies kann manuell oder semiautomatisch erfolgen. So ist es möglich, die von der Vorrichtung geschätzten Füllgrade zu korrigieren und zu verbessern. In einer bevorzugten Ausführung übermittelt die Verarbeitungseinheit den vorbestimmten Füllgrad an das Machine-Learning-Modell der KI-Einheit, sodass eine schnelle und zuverlässige Verarbeitung garantiert ist. Die KI-Einheit kann in der Vorrichtung integriert sein.

In einer bevorzugten Ausgestaltung der Vorrichtung umfasst die KI-Einheit mehrere Schätzer, die zur Schätzung des Füllgrads verwendet werden. Jeder der Schätzer umfasst einen Entscheidungsbaum. Bevorzugt wird für jeden Schätzer oder Entscheidungsbaum ein Zufalls-Intervall mit einer variablen Länge im Indexbereich der Raumimpulsantwort festgelegt. Das Zufalls-Intervall kann folglich maximal die gesamte Länge des Indexbereichs umfassen, bevorzugt ist die Länge jedoch geringer. Weiterhin wird für jeden Schätzer ein Fix-Intervall festgelegt, das die gleiche Länge wie das Zufalls-Intervall hat. Zufalls-Intervall und Fix-Intervall unterscheiden sich dadurch, dass das Fix-Intervall stets am Beginn des Indexbereichs der Raumimpulsantwort angeordnet ist, während das Zufalls-Intervall auch an einem beliebigen Punkt innerhalb des Indexbereichs angeordnet sein kann.

In besonderer Ausführungsform werden aus dem Zufalls-Intervall und dem Fix-Intervall Merkmale für eine Klassifikation zur Bestimmung des Füllgrads bestimmt. Hierbei werden die in den jeweiligen Intervallen enthaltenen Datenwerte bzw. Werte der entsprechenden Signale verwendet und verarbeitet. In einer bevorzugten Ausführung werden in dem Fix-Intervall die Standardabweichung und ein Mittelwert zur Klassifikation der Werte berücksichtigt. In einer anderen bevorzugten Ausführung wird in dem Zufalls-Intervall die Magnitude des Frequenzspektrums sowie das Verhältnis aus Minimalwert und Maximalwert der in dem Intervall enthaltenen Werte zur Klassifikation verwendet.

Besonders bevorzugt werden bei der Klassifikation der Werte im Fix-Intervall die jeweils benachbarten Werte des Intervalls berücksichtigt. Vorzugsweise werden aus den benachbarten Werten die Standardabweichung und der Mittelwert berechnet. Besonders bevorzugt ist es, wenn die Differenz zwischen zwei benachbarten Werten des Empfangssignals verwendet wird und die Standardabweichung sowie der Mittelwert auf dieser Differenz bzw. den Differenzwerten innerhalb des Fix-Intervalls beruhen.

Eine bevorzugte Ausführungsform der KI-Einheit, die die Klassifikationsdaten für die oben genannte Vorrichtung liefert, sieht vor, dass das Machine-Learning-Modell Klassifikationsdaten zur Klassifikation der Eingangswerte erzeugt.

Besonders bevorzugt werden die Klassifikationswerte verarbeitet, ausgegeben und/oder abgespeichert, beispielsweise in einer Speichereinheit der Vorrichtung. Die Klassifikationsdaten zur Klassifikation der Eingangswerte können beispielsweise auf dem oben beschriebenen Machine-Learning-Modell der Verarbeitungseinheit bzw. einer KI-Einheit beruhen, wobei bevorzugt wenigstens ein, besonders bevorzugt mehrere Schätzer verwendet werden. Bevorzugt kann vorgesehen sein, die Eingangswerte anstelle der Raumimpulsantwort zu verarbeiten und den Füllgrad anhand der Eingangswerte zu ermitteln.

Ebenfalls bevorzugt ist eine Ausführungsform, bei der die KI-Einheit ein Machine-Learning-Modell umfasst, wobei für den oder bevorzugt für jeden Schätzer ein separates Machine-Learning-Modell vorgesehen sein kann. Beispielsweise lassen sich bei Verwendung eines Zufalls-Intervalls und eines Fix-Intervalls die Länge der jeweiligen Intervalle sowie der Anfangsindex (Anfangswert) des Zufalls-Intervalls, der zufällig gewählt sein oder auf einer Zufallszahl oder Pseudozufallszahl beruhen kann, verändern. Bei den einzelnen Machine-Learning-Modellen können die Eingangswerte auf unterschiedlichen diskreten Werten eines akustischen Empfangssignals beruhen.

Bevorzugt ist die KI-Einheit in dem Behälter angeordnet, so dass ein Training und/oder eine Kalibration vor Ort erfolgen kann. Besonders bevorzugt ist die KI-Einheit in der Vorrichtung integriert. Die Anordnung der KI-Einheit in dem Behälter ist möglich, da die Anforderungen an Rechenleistung und -kapazität der KI-Einheit gering sind, ohne Einschränkungen des Systems hervorzurufen.

Die oben genannte Vorrichtung kann beispielsweise in einem System zur Erkennung des Füllgrads in einem Behälter eingesetzt werden. Ein derartiges System umfasst die Vorrichtung sowie einen Behälter, bevorzugt mit einem Deckel, wobei wenigstens Teile der Vorrichtung an dem Behälter angeordnet sind, bevorzugt an der Innenseite oder einem Rand des Behälters oder an der Innenseite des optionalen Deckels.

Bevorzugt umfasst das System oder die Vorrichtung eine Energieversorgungseinheit oder Energiequelle, beispielsweise in Form einer Batterie oder eines Ackus oder einer Solarzelle an der Außenseite des Behälters oder Deckels. Auf diese Weise ist die Vorrichtung und/oder das System autark und unabhängig von einer stationären Energiequelle. Vorrichtung und/oder System sind damit auch mobil, was insbesondere bei Müllbehältern, Abfallbehältern und Mülltonnen wichtig ist, die jedenfalls für die Leerung bewegt werden.

Vorzugsweise umfasst das System eine Anzeigeeinheit, die außerhalb des Behälters sichtbar ist. Ebenso bevorzugt ist eine Ausführungsform, die eine KI-Einheit umfasst, die die Klassifikationsdaten zur Bestimmung des Füllgrads bereitstellt.

Die Erfindung wird nachfolgend anhand einiger ausgewählter Ausführungsbeispiele im Zusammenhang mit den beiliegenden Zeichnungen näher beschrieben und erläutert. Es zeigen:

Figur 1     eine Ausführungsform der erfindungsgemäßen Vorrichtung;

Figur 2     eine Ausführungsform des erfindungsgemäßen Systems mit KI-Einheit;

Figur 3     die Ausführungsform aus Figur 2 mit KI-Einheit während einer Trainingsphase;

Figur 4     die Ausführungsform gemäß Figur 2 mit KI-Einheit während einer Validierungsphase; und

Figur 5     eine schematische Darstellung des Ablaufs des erfindungsgemäßen Verfahrens.

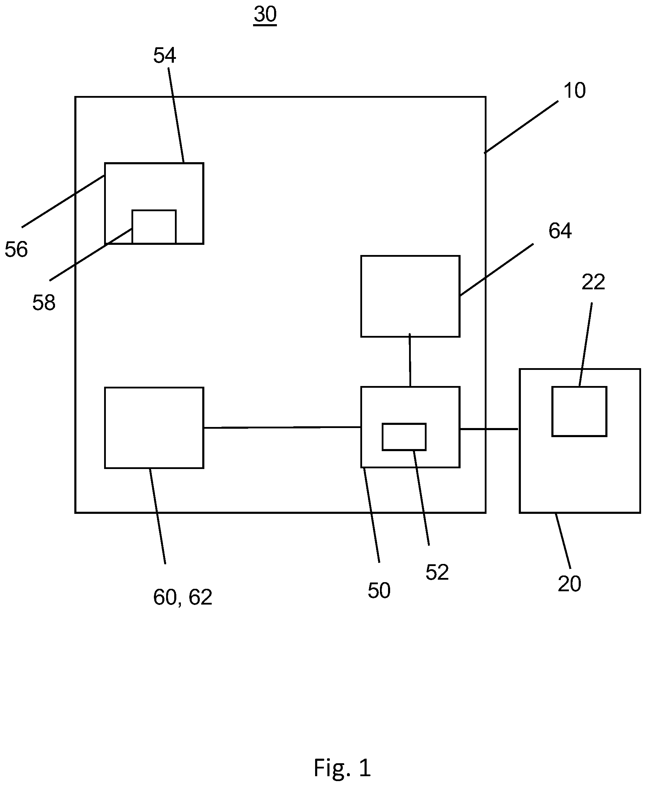

Die Figuren 1 bis 4 zeigen schematisch verschiedene Ausführungsformen der erfindungsgemäßen Vorrichtung 10 sowie einer KI-Einheit 20 und einem System 30, das die Vorrichtung 10 und die KI-Einheit 20 umfasst. Einige Figuren zeigen einen Behälter 40 mit der Vorrichtung 10.

In Figur 1 ist die Vorrichtung 10 zum Erkennen des Füllgrads eines mit einem Stoff gefüllten Behälters im Detail dargestellt. Sie umfasst eine Verarbeitungseinheit 50 mit einem Microcontroller 52. Die Verarbeitungseinheit 50 kann beispielsweise ein einfacher Kleincomputer, Mikrocontroller oder "Raspberry Pi" sein.

Eine akustische Signalquelle 54 ist zum Erzeugen eines akustischen Sendesignals im hörbaren Bereich ausgebildet. Die Signalquelle 54 kann ein Lautsprecher 56 oder ein Buzzer sein. Sie kann optional einen Signalgenerator 58 umfassen, der ein Speisesignal zum Speisen der Signalquelle 54 aufweist. Der Signalgenerator 58 ist in der hier gezeigten Ausführung in der Signalquelle 54 integriert. Er kann auch ein separates Bauteil sein.

Die Vorrichtung 10 umfasst weiter einen Signalempfänger 60, der ein Mikrofon 62 ist. Der Signalempfänger 60 ist zum Empfang eines akustischen Empfangssignals ausgebildet, das auf dem akustischen Sendesignal der Signalquelle 54 basiert und in dem Behälter reflektiert wird. Es gibt Aufschluss über den Füllgrad des Behälters.

Darüber hinaus umfasst die Vorrichtung 10 eine Speichereinheit 64, die ein Zwischenspeicher sein kann und zum Zwischenspeichern des Sendesignals und/oder des Empfangssignals dient. Weitere Werte oder Daten können in der Speichereinheit 64 ebenso gespeichert sein.

Der Signalgenerator 58 ist dazu ausgebildet, ein Sinussignal in einem vorgegebenen Frequenzbereich zu erzeugen. Das Sinussignal kann beispielsweise ein impulsförmiges Signal sein und beispielsweise die Form haben:

$$x[n] = \sin\left(2\pi\left(\frac{f_0 n}{f_s} + \frac{f_1 - f_0}{2T}\left(\frac{n}{f_s}\right)^2\right)\right)$$

(Formel 3)

Die Verarbeitungseinheit 50 ist dazu ausgebildet, um aus dem Empfangssignal und dem Sendesignal den Füllgrad des Behälters 40 zu bestimmen. Dabei werden Klassifikationsdaten eines Machine-Learning-Modells einer KI-Einheit 20 verwendet. Die KI-Einheit 20 kann Teil der Vorrichtung 10 sein. Sie kann, wie in Figur 1 gezeigt, eine separate Einheit bilden. Die KI-Einheit 20 umfasst das Machine-Learning-Modell (ML-Modell) 22.

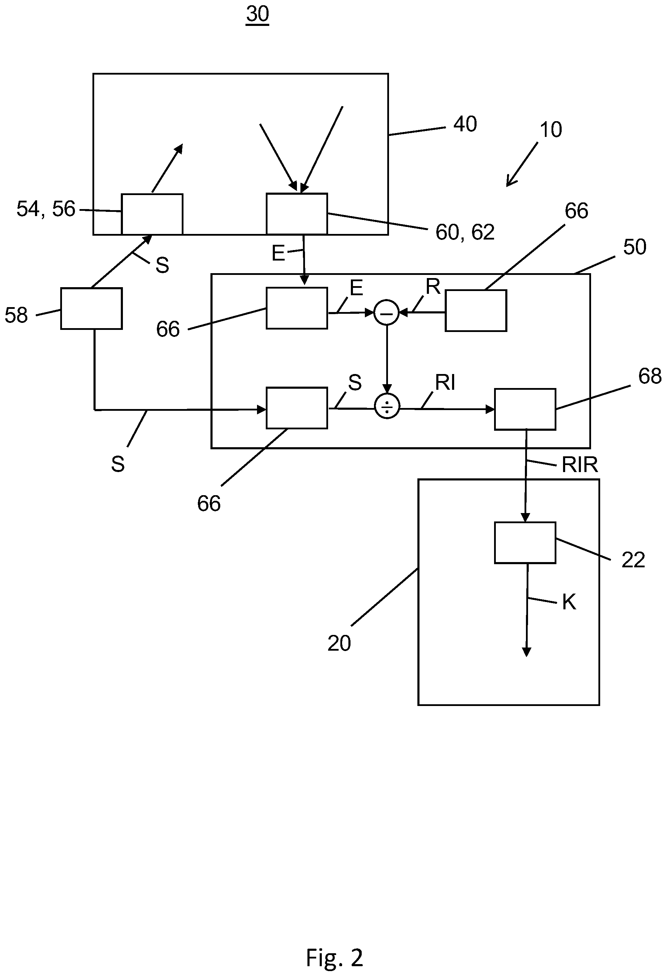

Figur 2 zeigt das System 30 mit einem Behälter 40, in dem die Signalquelle 54 in Form eines Lautsprechers 56 angeordnet ist. Der Lautsprecher 56 wird von dem Signalgenerator 58 gespeist, der das Sinussignal für die Verarbeitung erzeugt. In dem Behälter 40 ist auch der Signalempfänger 60 als Mikrofon 62 integriert.

Das von dem Mikrofon 62 empfangene Empfangssignal E ist ein Zeitsignal, das in der Verarbeitungseinheit 50 mittels einer FFT-Einheit 66 in den Frequenzbereich transformiert wird. Das Speisesignal S des Signalgenerators 58 wird nicht nur dem Lautsprecher 56 sondern auch der Verarbeitungseinheit 50 zugeführt und hier mit einer weiteren FFT-Einheit 66 ebenfalls in den Frequenzbereich transformiert. Das Speisesignal entspricht dem Sendesignal und stellt die elektrische Form des akustischen Sendesignals dar.

Von dem fouriertransformierten Empfangssignal E wird ein geschätztes Rauschspektrum oder Rauschsignal R subtrahiert, sodass das Empfangssignal nahezu ohne Rauschanteil ist. Dieses Rauschsignal oder Rauschspektrum wird in Zeiten geschätzt, in denen das Empfangssignal E aufgrund eines fehlenden Speisesignals S oder Sendesignals nicht vorhanden ist und nur Rauschen gemessen wird. Hierbei wird angenommen, dass das Rauschen ein stationärer oder sich langsam verändernder Prozess ist und sich das Spektrum in den Zeiten während der Messung nicht signifikant ändert. Zur Spektralsubtraktion des Rauschens ist nur ein relativ geringer Rechenaufwand möglich, den ein einfacher Microcontroller 52 bewältigt.

Das vom Rauschen befreite Empfangssignal E (fouriertransformiertes Empfangssignal) wird mit dem fouriertransformierten Sendesignal S beaufschlagt, indem eine Division der beiden Signale durchgeführt wird, wobei das Empfangssignal E durch das Sendesignal S dividiert wird. Das entstehende Signal RI wird mittels einer IFFT-Einheit 68 (inverse Fourier-Transformationseinheit) in den Zeitbereich rücktransformiert. Das sich ergebende Signal entspricht der Raumimpulsantwort (RIR). Dieses Signal wird in der KI-Einheit 20 und ihrem Machine-Learning-Modell 22 verarbeitet. Die daraus erzeugten Klassifikationsdaten K können zur Bewertung und Klassifikation des Füllgrads in dem Behälter 40 verwendet werden.

Das beschriebene Vorgehen basiert darauf, dass in der Signalverarbeitung die Impulsantwort ein wesentliches Merkmal ist und am Ausgang eines linearen zeitinvarianten Systems vorliegt, wenn dieses einem Impuls ausgesetzt ist. Ein Impuls ist ein transientes Signal von kurzer Dauer. Bei kontinuierlichen Systemen wird dies häufig durch eine DIRAC-Delta-Funktion beschrieben, während bei diskreten Systemen die Kronecker-Delta-Funktion verwendet wird. In LTI-Systemen wird auch über eine Zeitverschiebung hinweg eine konsistente Antwort geliefert. Ein Faltungsprozess, der ein integraler Bestandteil des LTI-Systems ist, umfasst die Kombination einer Impulsantwort mit einem Eingangssignal, um das Ausgangssignal zu erhalten. Aufbauend auf dem Konzept der Impulsantwort beschreibt die räumliche Impulsantwort (RIR) die zeitliche Abfolge von Schallreflektion und Nachhall in einem Raum, ausgelöst durch einen kurzen Schallimpuls. Die RIR umfasst alle relevanten Informationen über die akustischen Eigenschaften des Raums und ermöglicht eine Analyse der Raumakustik. Diese Raumimpulsantworten können als Basisdatensatz für das Training eines Machine-Learning-Modells verwendet werden.

Wie Figur 2 zu entnehmen ist, ist die KI-Einheit 20 eng mit der Verarbeitungseinheit 50 verknüpft. Teile der Verarbeitungseinheit 50 können beispielsweise in der KI-Einheit 20 implementiert sein. Die KI-Einheit 20 kann somit Teil der Vorrichtung 10 sein. Damit können die Operationen der Künstlichen Intelligenz, KI-Einheit 20, direkt auf der lokalen Vorrichtung 10 ausgeführt werden. Die Notwendigkeit einer cloudbasierten Verarbeitung entfällt. Dies stellt einen Paradigmen-Wechsel weg von der klassischen Verarbeitung und hin zu einer lokalisierten Verarbeitung dar, die erhebliche Vorteile in Bezug auf Datenschutz, Reaktionsfähigkeit in Echtzeit und Unabhängigkeit von einer Netzwerkkonnektivität bieten.

Speziell erlaubt die in der Vorrichtung 10 integrierte KI-Einheit 20, die auch On-Device-KI genannt wird, eine lokale Klassifizierung von Behältern, z.B. Abfallbehältern, und deren Füllgrad auf Grundlage von akustischen Schallanalysen im hörbaren Bereich. Die Vorrichtung 10 kann direkt an der Innenseite eines Behälters, Müllbehälters, Containerdeckels oder Deckels eines Behälters angeordnet sein.

Vorzugsweise kann der hier beschriebene SIREC-Algorithmus (Sonic Impulse Response Ensemble Classifier) verwendet werden, der auf dem Prinzip des Ensemble-Lernens beruht und ein maschinelles Lernen aus verschiedenen Modellen verwendet, um kollektive Entscheidungen zu treffen. Mehrere Entscheidungsbaummodelle werden bevorzugt als Teil des Ensembles verwendet, um den Füllgrad des Behälters oder Abfallbehälters zu klassifizieren. Entscheidungsbäume sind aufgrund ihrer Vielfältigkeit im Umgang mit komplexen Datensätzen und ihrer Fähigkeit, transparente und interpretierbare Entscheidungswege für Klassifikationsaufgaben zu liefern, prinzipiell sehr geeignet.

In einer bevorzugten Ausführungsform der vorliegenden Erfindung wird eine Pulsweitenmodulation verwendet, um eine lineare Sinusschwingung zu erzeugen, die als Speisesignal für den Lautsprecher 56 oder die Signalquelle 54 verwendet wird. Das abgegebene Signal wird nach Reflexion im Behälter von dem Mikrofon 62 empfangen und wie oben beschrieben verarbeitet.

Zu der oben beschriebenen Annäherung der Raumimpulsantwort RIR mittels des LTI-Systems, wie es die Vorrichtung 10 darstellt, ist eine eindeutige Identifikation denkbar, wenn das Sendesignal auf einem DIRAC-Impuls oder einem Kronecker-Impuls beruhen würde. Ein derartiger idealisierter Impuls erstreckt sich theoretisch über den gesamten Frequenzbereich. Die Fouriertransformierte der DIRAC-Deltafunktion ist über alle Frequenzen hinweg konstant. Dies bedeutet, dass alle Frequenzen gleichzeitig und mit gleicher Intensität stimuliert werden. Ähnlich verhält es sich für Kronecker-Impulse. Die Erzeugung solcher idealisierter Impulse mit einer Schallquelle ist jedoch nicht praktikabel, beispielsweise aufgrund der unendlich kurzen Dauer der Signale, die vorausgesetzt wird. Daher werden für die elektroakustischen Systeme zur Stimulation von Schallimpulsen alternative Methoden verwendet, die die Eigenschaften des idealen Impulses nachahmen, aber in der Praxis durchführbar sind. Ein solches Signal ist in der Vorrichtung implementiert und oben in Formel 3 angegeben. Es deckt einen sehr weiten Frequenzbereich ab, um eine umfassende Messung der akustischen Eigenschaften des Behälters zu ermöglichen.

Ausgehend hiervon muss zur Extraktion der Raumimpulsantwort aus dem Empfangssignal ein Inversionsverfahren (Inversion method) angewendet werden. Dabei wird ein bekanntes Sendesignal vorausgesetzt, um die Reaktion des Raums zu approximieren. Das Empfangssignal wird mit dem ursprünglichen Sendesignal "aufgefaltet" bzw. "entfaltet", um die Raumimpulsantwort zu erhalten. Die Entfaltung ist die Umkehrung der Faltungsoperation, bei der versucht wird, eine unbekannte Funktion (RIR) aus dem Faltungsergebnis (Empfangssignal E) zweier Funktionen (Sendesignal S) und Raumimpulsantwort RIR abzuleiten, wenn das Speisesignal bzw. Sendesignal S und das Empfangssignal E bekannt sind. Während die Faltungsoperation prinzipiell immer berechenbar ist, ist die Umkehrung (Entfaltung) aufgrund von möglichen Informationsverlusten nicht gesichert. Eine Näherungslösung für die Entfaltung zur Bestimmung der Raumimpulsantwort ist die Berechnung im Frequenzbereich, basierend auf dem Prinzip, dass die Fouriertransformierte einer Faltung zweier Funktionen das Produkt ihrer individuellen Fouriertransformierten ist. Folglich wird die (angenäherte) Raumimpulsantwort durch die inverse Fourier-Transformation der Division der Fouriertransformierten der aufgezeichneten Signale (Empfangssignal und Sendesignal) gebildet, wie oben in Figur 2 dargestellt.

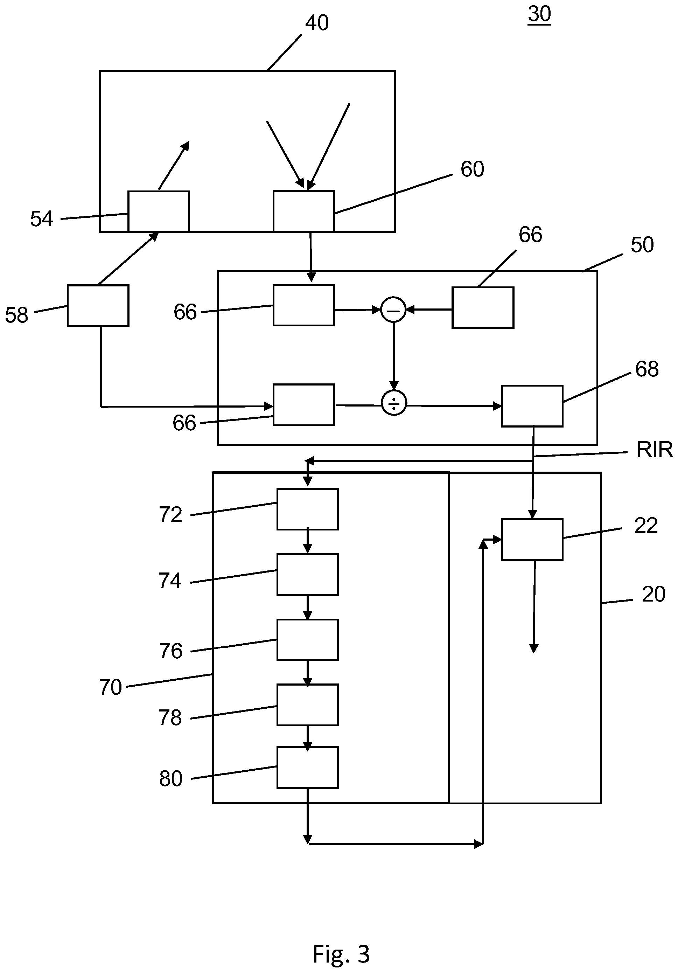

Figur 3 zeigt das System aus Figur 2 während eines Trainingsprozesses, während dem Raumimpulsantworten gesammelt werden, die unterschiedlichen Füllständen des Behälters 40 entsprechen. Ein maschinelles Lernmodell, das das SIREC-Modell umfasst, wird mit diesen Daten trainiert. Dazu wird eine vorher festgelegte oder vorbestimmbare Anzahl von Schätzern verwendet, wobei jeder Schätzer einen Entscheidungsbaum umfasst. Für jeden Baum werden zwei Intervalle erzeugt, ein Zufalls-Intervall, dessen Länge innerhalb eines einstellbaren Maximal- und Minimalbereichs über die Gesamtlänge der Raumimpulsantwort variiert, und ein Fix-Intervall, das der Länge des Zufall-Intervalls entspricht, aber am Anfang der Raumimpulsantwort liegt. Die Merkmale des Behälters 40 bzw. des Füllgrads des Behälters 40 werden aus beiden Intervallen extrahiert, um den jeweiligen Entscheidungsbaum bzw. Schätzer zu trainieren. Innerhalb des Zufalls-Intervalls wird die Größe des Frequenzspektrums mit Hilfe der Fast-Fourier-Transformation bestimmt und das Verhältnis zwischen Minimal- und Maximalwerten extrahiert. Im Rahmen der Erfindung haben empirische Analysen gezeigt, dass die Merkmale für eine gute Klassifikation von Bedeutung sind. Innerhalb des Fix-Intervalls werden ebenfalls zwei Merkmalsklassen extrahiert, die auf der Grundlage eines erfinderischen Ansatzes basieren und den Mittelwert und die Standardabweichung als charakteristische Merkmale der Zeitreihe in das Training des Entscheidungsbaum bzw. Schätzers einbeziehen.

Es hat sich gezeigt, dass aufgrund der Raumimpulsantworten die Berechnung des Mittelwerts für verschiedene Klassen einen Wert nahe Null ergeben kann, was auch die Standardabweichung problematisch macht, da sie vom Mittelwert abhängt. Erfindungsgemäß wurde deshalb für das Fix-Intervall jeweils die Differenz zwischen zwei benachbarten Werten über alle diskreten n Werte des Intervalls berechnet, um den Mittelwert $\mu$ und die Standardabweichung $\sigma$ dieser neu generierten und um einen Wert reduzierten Werte zu bestimmen.

$$\forall I_{\text{fix.}} \in \mathbb{R}^n \text{ with } I_{\text{fix.}} = [\iota_1, \iota_2, ..., \iota_{\text{n}}]^T :$$

$$\mu_{\text{diff.}} = \frac{\sum_{k=1}^{n-1}(\iota_{\text{k}} - \iota_{\text{k+1}})}{n - 1}$$

$$\sigma_{\text{diff.}} = \sqrt{\frac{1}{n - 1} \sum_{k=1}^{n-1} \left(\iota_{\text{k}} - \iota_{\text{k+1}} - \mu_{\text{diff.}}\right)^2}$$

(Formel 4)

Mit diesem Ansatz werden nicht nur die Größe des Mittelwerts und der Standardabweichung erfasst, sondern auch die charakteristische Eigenschaft jeder Raumimpulsantwort, die mit diesen beiden Werten kombiniert wird. Mit dieser Methode der Merkmalsextraktion kann jeder der geschätzten Bäume bzw. Schätzer trainiert werden. Jeder Schätzer bildet ein unabhängiges Machine-Learning-Modell 22, das in Kombination das vollständige Ensemble-Modell oder Ensemble-ML-Modell bildet.

Gemäß Figur 3 werden in einem Trainingsblock 70, der Teil der KI-Einheit 20 ist, Trainingsdaten verarbeitet. Die von der Verarbeitungseinheit 50 ausgegebenen Raumimpulsantworten (RIR) werden in einem Trainingsdatenmodul 72 einem Trainingsdatensatz zugeordnet. Hieraus werden in einem Intervallblock 74 die Fix-Intervalle und Zufalls-Intervalle für eine Anzahl N von Schätzern, die einen Entscheidungsbaum umfassen oder sind, festgelegt. Dabei werden die Intervalle für jeden der Entscheidungsbäume erzeugt. Die Daten aus dem Trainingsdatenmodul 72 werden mit den gewählten Intervallen und der Anzahl N der Entscheidungsbäume verwendet, um in einem Merkmalextraktor 76 verarbeitet zu werden. Hierauf können die trainierten Klassifikationsdaten beruhen. In einem Modellblock 78 werden die Machine-Learning-Modelle 22 der einzelnen Schätzer jeweils mit den entsprechenden Intervallen beaufschlagt und die Daten für die Machine-Learning-Modelle 22 erzeugt. In einem Ensembleblock 80 können die Daten der einzelnen ML-Modelle 22 zu einem Ensemble-Modell zusammengeführt werden.

Das Ensemble-Modell berücksichtigt die jeweiligen Machine-Learning-Modelle 22, um eine Klassifikation für die berechneten Raumimpulsantworten durchzuführen und so einen Füllgrad des Behälters 40 zu klassifizieren.

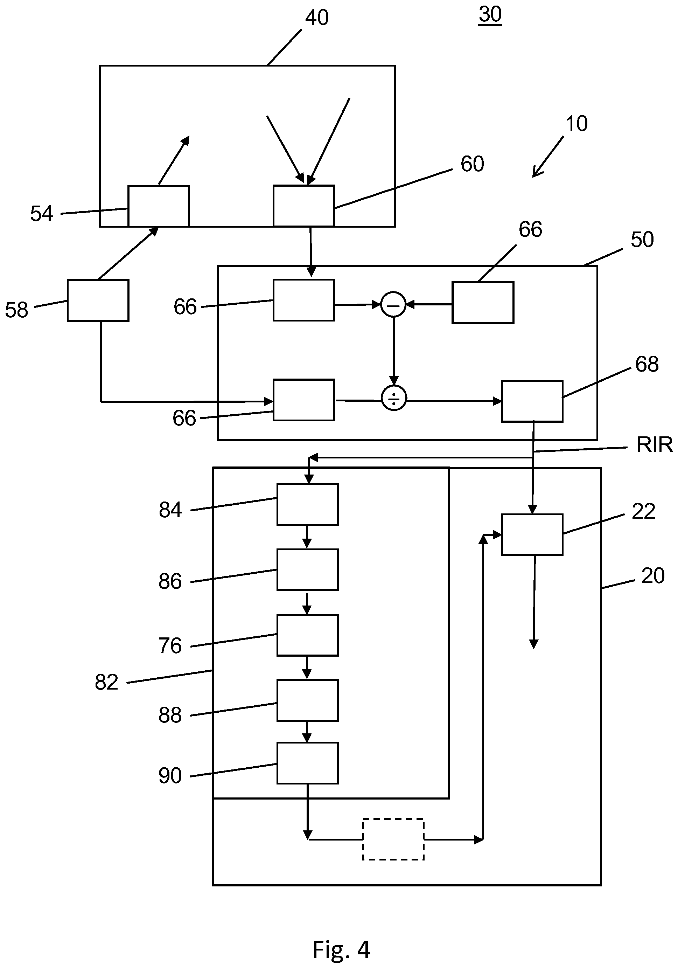

Figur 4 zeigt das System 30 aus Figur 2 während eines Validierungsprozesses. Hier werden ebenfalls die Raumimpulsantworten RIR gesammelt und für verschiedene Ebenen verwendet, um die Genauigkeit des entwickelten Ensemble ML-Modells zu validieren, was in einem Validierungsblock 82 der KI-Einheit 20 erfolgt. Die auf den Raumimpulsantworten basierenden Testdaten werden in einem Testdatenmodul 84 zur Verfügung gestellt und optional gespeichert. In einem Intervallmodul 86 werden die während der Trainingsphase erzeugten Zufalls-Intervalle und Fix-Intervalle für die festgelegte Anzahl an Schätzern und Entscheidungsbäumen verwendet. Die Testdaten werden gemeinsam mit den ausgewählten Intervallen dem Merkmalsextraktor 76 zugeführt, der schon während der Trainingsphase verwendet wurde. In einem Schätzblock 88 werden die aus dem Merkmalsextraktor 76 hervorgerufenen Klassifikationswerte für jedes Intervall verarbeitet und einem Validierungsmodul 90 zugeführt, um eine Validierung durchzuführen und um zu entscheiden, ob die Werte vorgegebene Anforderungen erfüllen und für eine Schätzung des Füllgrads in einem Behälter 40 geeignet sind. Die einzelnen ML-Modelle können dann in einem optionalen Ensemblemodul 92 zusammengeführt und einer Machine-Learning-Einheit mit den ML-Modellen 22 zur Verfügung gestellt werden.

Die aus dem Machine-Learning-Modell 22 ausgegebenen Klassifikationswerte können für die Bestimmung des Füllgrads in dem Behälter genutzt werden. In dem Validierungsblock 82 werden also die während des Trainingsprozesses erstellten Intervalle verwendet, relevante Merkmale aus den Daten extrahiert und die Vorhersagen aller Entscheidungsbäume bzw. Schätzer aggregiert, um ein Endergebnis zu erhalten. Die in dem Validierungsmodul 90 verwendete F1-Metrik dient dazu, um festzustellen, ob die Validierung hinreichend genau ist, um das trainierte und validierte Ensemble ML-Modell zu verwenden. Beispielsweise kann das Ensemblemodell in einem Computerprogrammcode umgewandelt werden, um in das Machine-Learning-Modell 22 hochgeladen und implementiert zu werden. Alternativ kann das Programm auch in die Verarbeitungseinheit 50 geladen und von dem dort angeordneten Microcontroller 52 ausgeführt werden.

Die F1-Metrik ist eine bekannte Metrik zur Bewertung der Leistung eines Modells in der Künstlichen Intelligenz (KI) und kombiniert die Metriken Precision und Recall zu einem einzigen Wert und ermöglicht somit eine umfassende Einschätzung des Modells.

Da dies alles innerhalb der Vorrichtung 10 erfolgen kann, insbesondere, wenn die KI-Einheit 20 in der Vorrichtung 10 integriert ist, werden lokale Vorhersagen des Füllgrads unter Verwendung des trainierten ML-Modells 22 möglich, ohne dass die Klassifizierungsaufgabe an externe Ressourcen delegiert werden muss.

Im Rahmen der Erfindung hat sich gezeigt, dass das auf dem SIREC-Algorithmus beruhende Verfahren sehr gute Ergebnisse bei der Vorhersage bzw. dem Schätzen des Füllgrads eines Behälters liefert. Diese Ergebnisse sind deutlich besser als die auf dem bisherigen bekannten Verfahren beruhenden Ergebnisse. Dabei wurden für die Datenerfassung 4.096 Abtastwerte bei einer Abtastrate von 10 Kilohertz exemplarisch verwendet.

Bei der Verwendung von kleineren Behältern mit einem Volumen von maximal 20 Litern ergab sich eine Erkennungsgenauigkeit von deutlich über 90 %, um den Füllstand zu bestimmen. Auch hat sich gezeigt, dass Deckel an der Oberseite eines Behälters geeignet sind, um die Vorrichtung aufzunehmen. Durch diese Anordnung wird die Genauigkeit weiter verbessert.

Beim Einsatz der erfindungsgemäßen Vorrichtung 10 in Abfallbehältern der Standardgröße von 240 Litern zeigte das erfindungsgemäße System eine signifikante Effektivität bei der Bewertung des Behältervolumens und eine Genauigkeit von über 98 %, um den richtigen Füllgrad anzugeben. Ein weiterer Vorteil liegt in der Verwendung von kostengünstigen Komponenten, beispielsweise einfacher Mikrofone und Lautsprecher und einfacher Verarbeitungseinheiten bzw. Microcontrollern, die sehr preiswert sind, was eine gute Skalierbarkeit ermöglicht und das praktische Anwendungspotential des Systems erhöht. Selbstverständlich lässt sich das System auch auf andere Behälter, wie beispielsweise Container, anwenden.

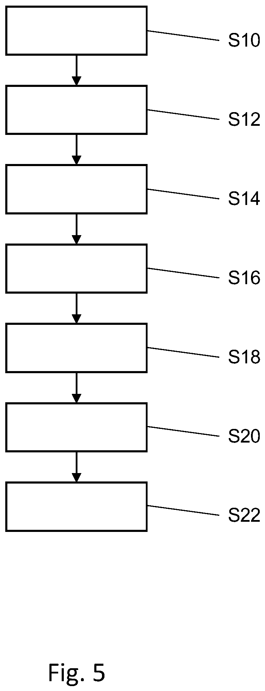

Figur 5 zeigt den prinzipiellen Ablauf eines Verfahrens eines erfindungsgemäßen Verfahrens zum Bestimmen des Füllgrads eines mit einem Stoff befüllten Behälters. Es umfasst mehrere Schritte, die jedenfalls teilweise optional sein und auch in anderer Reihenfolge erfolgen können.

In einem Schritt S10 erfolgt das Generieren eines Steuersignals, um eine Signalquelle anzusteuern. Ein Schritt S12 betrifft das Aussenden eines akustischen Sendesignals oder Schallsignals in den zu untersuchenden Behälter. Das Sendesignal basiert auf dem von dem Signalgenerator erzeugten Steuersignal. Steuersignal und/oder Sendesignal liegen im Frequenzbereich von 20 Hz und 20 kHz. Das Sendesignal liegt damit im hörbaren Bereich und ist eine Schallwelle.

In einem Schritt S14 erfolgt das Empfangen eines akustischen Empfangssignals, das auf dem ausgesendeten Sendesignal basiert und nach Reflektion in dem Behälter zu einem Signalempfänger gelangt.

In einem optionalen Schritt S16 kann das Sendesignal und/oder das Empfangssignal zwischengespeichert werden, beispielsweise in einer Speichereinheit, um für eine weitergehende Signalverarbeitung zur Verfügung zu stehen.

Ein Schritt 18 sieht das Ermitteln einer Raumimpulsantwort aus dem Sendesignal und dem Empfangssignal vor. Eine KI-Einheit kann bevorzugt die Raumimpulsantwort zur Klassifikation verwenden und bei der Ermittlung von Klassifikationsdaten berücksichtigen.

Ein Schritt S20 umfasst das Bestimmen des Füllgrads des Behälters aus der Raumimpulsantwort unter Verwendung von Klassifikationsdaten eines Machine-Learning-Modells einer KI-Einheit oder optional und zusätzlich aus dem Empfangssignal und dem Sendesignal, wobei hier bevorzugt der oben beschriebene Algorithmus Anwendung finden kann.

Die Klassifikationsdaten des Machine-Learning-Modells der KI-Einheit werden mit verwendet, um den Füllgrad in dem Behälter zu bestimmen. Die Bestimmung des Füllgrads basiert auf Raumimpulsantworten von Behältern, die bevorzugt im Vorhinein erzeugt wurden, beispielsweise durch Messung oder Simulation. Die Bestimmung des Füllgrads erfolgt durch Abgleichen der aktuellen Raumimpulsantwort mittels mehrerer Schätzer, die durch Entscheidungsbäume repräsentiert werden.

Ein ebenfalls optionaler Schritt S22 betrifft das Anzeigen des ermittelten Füllgrads bzw. geschätzten Füllgrads an einer Anzeigeeinheit, die optional sein kann. Alternativ kann der Füllgrad auch auf einem Mobilgerät angezeigt werden, beispielsweise in einer entsprechenden Software oder Applikation.

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Eine Einheit, ein Block, ein Modul, eine Vorrichtung und ein System können teilweise oder vollständig in Hard- und/oder in Software umgesetzt sein. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann. Ein Computerprogramm kann auf einem nichtflüchtigen Datenträger gespeichert/vertrieben werden, beispielsweise auf einem Halbleiterlaufwerk (SSD). Ein Computerprogramm kann zusammen mit Hardware und/oder als Teil einer Hardware vertrieben werden, beispielsweise mittels des Internets oder mittels drahtgebundener oder drahtloser Kommunikationssysteme. Bezugszeichen in den Patentansprüchen sind nicht einschränkend zu verstehen.

**Patentansprüche**

1. Vorrichtung zum Erkennen des Füllgrads eines mit einem Stoff gefüllten Behälters, umfassend

eine Verarbeitungseinheit (50) mit einem Microcontroller (52);
einen Signalgenerator (58) zum Generieren eines Speisesignals zum Speisen einer Signalquelle (54);
eine akustische Signalquelle (54) zum Aussenden eines akustischen Sendesignals im hörbaren Bereich, das auf dem von dem Signalgenerator (58) erzeugten Speisesignal basiert;
einen Signalempfänger (60) zum Empfangen eines akustischen Empfangssignals, basierend auf einer isolierten Impulsantwort, die Basis der Raumimpulsantwort des gefüllten Behälters ist;
eine Speichereinheit (64) zum Zwischenspeichern des Sendesignals und/oder des Empfangssignals; und
eine Energieversorgungseinheit, die die Vorrichtung unabhängig von einem Versorgungsnetz mit Energie versorgt;

wobei

der Signalgenerator (58) ausgebildet ist, um ein Sinussignal in einem vorgegebenen Frequenzbereich zwischen 20 Hz und 20 kHz zu erzeugen;

die Verarbeitungseinheit (50) dazu ausgebildet ist, um aus dem Empfangssignal und dem bekannten Sendesignal die Raumimpulsantwort zu berechnen und anhand dieser den Füllgrad des Behälters (40) zu bestimmen;

die Bestimmung des Füllgrads auf Klassifikationsdaten der Raumimpulsantwort eines Machine-Learning-Modells (22) einer KI-Einheit (20) basiert.

2. Vorrichtung nach Anspruch 1, **dadurch gekennzeichnet, dass** die Vorrichtung (10) eine Kommunikationseinheit umfasst, um den ermittelten Füllgrad an eine externe Rechnereinheit auszugeben, bevorzugt drahtlos, wobei die Rechnereinheit ein Server, ein cloudbasierter Rechner, ein stationärer Rechner oder ein mobiles Endgerät sein kann.

3. Vorrichtung nach einem der vorhergehenden Ansprüche, **dadurch gekennzeichnet, dass** die Klassifikationsdaten des Machine-Learning-Modells (22) auf Trainingsdaten beruhen, mit denen die KI-Einheit (20) gespeist und trainiert wurde, wobei bevorzugt die Klassifikationsdaten des Machine-Learning-Modells (22) in der Speichereinheit (64) gespeichert sind.

4. Vorrichtung nach einem der vorhergehenden Ansprüche, **dadurch gekennzeichnet, dass** zur Verarbeitung des Empfangssignals und des Sendesignal eine Transformation in den Frequenzbereich erfolgt, das transformierte Empfangssignal durch das transformierte Sendesignal dividiert wird und nach der Bestimmung des resultierenden Ausgangssignals eine Rücktransformation in den Zeitbereich erfolgt, wobei bevorzugt eine Fourier-Transformation und eine inverse Fourier-Transformation angewendet wird.

5. Vorrichtung nach einem der vorhergehenden Ansprüche, **dadurch gekennzeichnet, dass** das Empfangssignal vor Verarbeitung des Sendesignals mit einem Rauschsignal der Umgebung beaufschlagt wird, wobei bevorzugt das Rauschsignal zunächst aus der Umgebung erfasst wird und besonders bevorzugt das Rauschsignal einer Transformation in den Frequenzbereich unterzogen wird und sehr bevorzugt von dem in den Frequenzbereich transformierten Empfangssignal abgezogen wird.

6. Vorrichtung nach einem der vorhergehenden Ansprüche, **dadurch gekennzeichnet, dass** an einem Anzeigeelement der ermittelte Füllstand für einen Benutzer angezeigt wird, wobei das Anzeigeelement bevorzugt an dem Behälter (40) angeordnet ist oder in einem mobilen Gerät integriert ist.

7. Vorrichtung nach einem der vorhergehenden Ansprüche, **dadurch gekennzeichnet, dass** die Verarbeitungseinheit (50) dazu ausgebildet ist, in einen Lernmodus versetzt zu werden, in dem der Verarbeitungseinheit (50) manuell ein vorgegebener oder vorbestimmter Füllgrad angegeben werden kann, wobei bevorzugt die Verarbeitungseinheit (50) den vorgegebenen oder vorbestimmten Füllgrad an das Machine-Learning-Model (22) der KI-Einheit (20) übermittelt.

8. Vorrichtung nach einem der vorhergehenden Ansprüche, **dadurch gekennzeichnet, dass** in der KI-Einheit (20) mehrere Schätzer verwendet werden, wobei jeder Schätzer einen Entscheidungsbaum umfasst, und jeder Schätzer ein Zufalls-Intervall mit einer variablen Länge in einem Indexbereich der Raumimpulsantwort und ein Fix-Intervall mit der gleichen Länge wie das Zufalls-Intervall aufweist, wobei das Fix-Intervall am Beginn des Indexbereichs des Empfangssignals angeordnet ist.

9. Vorrichtung nach dem vorhergehenden Anspruch, **dadurch gekennzeichnet, dass** aus dem Zufalls-Intervall und dem Fix-Intervall Merkmale für eine Klassifikation zur Bestimmung des Füllgrads bestimmt werden, wobei bevorzugt in dem Fix-Intervall eine Standard-Abweichung und ein Mittelwert zur Klassifikation berücksichtigt werden und ebenso bevorzugt in dem Zufalls-Intervall die Magnitude des Frequenzspektrums sowie das Verhältnis aus Minimalwert und Maximalwert zur Klassifikation berücksichtigt werden, und wobei weiter bevorzugt in dem Fix-Intervall die Klassifikation auf benachbarten Werten des Intervalls und deren Standard-Abweichung und Mittelwert basiert.

10. KI-Einheit zur Klassifikation von Eingangswerten und zur Verwendung in einer Vorrichtung nach Anspruch 1, umfassend ein Machine-Learning-Modell (22), mit dem die Eingangswerte verarbeitet werden, und mehrere Schätzer, die je einen Entscheidungsbaum umfassen,

wobei

die Eingangswerte einen Indexbereich aufspannen und eine Raumimpulsantwort repräsentieren;

für wenigstens einen der Schätzer das Machine-Learning-Modell (22) zur Klassifikation der Eingangswerte verwendet wird;

das Machine-Learning-Modell (22) ein Zufalls-Intervall mit einer variablen Länge innerhalb des Indexbereichs der Eingangswerte und ein Fix-Intervall mit der gleichen Länge wie das Zufalls-Intervall verwendet;

das Fix-Intervall am Beginn des Indexbereichs der Eingangswerte angeordnet ist;

in dem Zufalls-Intervall die Magnitude des Frequenzspektrums sowie das Verhältnis aus Minimalwert und Maximalwert zur Klassifikation berücksichtigt werden;

in dem Fix-Intervall eine Standard-Abweichung und ein Mittelwert zur Klassifikation berücksichtigt werden; und

in dem Fix-Intervall die Klassifikation auf benachbarten Eingangswerten und auf der Standard-Abweichung und auf dem Mittelwert für die Differenz von je zwei benachbarten Eingangswerten basiert.

11. KI-Einheit nach dem vorhergehenden Anspruch, **dadurch gekennzeichnet, dass** das Machine-Learning-Modell (22) Klassifikationsdaten zur Klassifikation der Eingangswerte erzeugt, die bevorzugt verarbeitet, ausgegeben und/oder abgespeichert werden.

12. KI-Einheit nach Anspruch 10 oder 11, **dadurch gekennzeichnet, dass** ein Machine-Learning-Modell (22) für jeden Schätzer vorgesehen ist und die Eingangswerte für das Machine-Learning-Modell (22) bevorzugt diskrete Werte eines akustischen Empfangssignals sind, besonders bevorzugt eines akustischen Empfangssignals der Vorrichtung (10) nach Anspruch 1.

13. System zur Erkennung des Füllgrads in einem Behälter, umfassend eine Vorrichtung (10) nach einem der vorhergehenden Ansprüche und einen Behälter (40), wobei wenigstens Teile der Vorrichtung (10) an einer Innenseite oder einem Rand des Behälters angeordnet sind.

14. System nach dem vorhergehenden Anspruch, **dadurch gekennzeichnet, dass** die Vorrichtung (10) eine Anzeigeeinheit umfasst, die von außerhalb des Behälters (40) sichtbar ist, und bevorzugt die KI-Einheit (20), die die Klassifikationsdaten zur Bestimmung des Füllgrads bereitstellt, Teil des Systems (30) ist.

15. Verfahren zum Bestimmen des Füllgrads eines mit einem Stoff gefüllten Behälters (40) umfassend die folgenden Schritte:

Generieren eines Steuersignals;

Aussenden eines akustischen Sendesignals in hörbaren Bereich von 20 Hz bis 20 kHz in den Behälter (40), das auf dem von dem Signalgenerator (58) erzeugten Steuersignal basiert;

Empfangen eines akustischen Empfangssignals;

Optionales Zwischenspeichern des Sendesignals und/oder des Empfangssignals;

Ermitteln einer Raumimpulsantwort aus dem Sendesignal und dem Empfangssignal;

Bestimmen des Füllgrads des Behälters (40) aus der Raumimpulsantwort unter Verwendung von Klassifikationsdaten eines Machine-Learning-Modells (22) einer KI-Einheit (20);

wobei die Klassifikationsdaten des Machine-Learning-Modells (22) der KIEinheit (20) zur Bestimmung des Füllgrads auf Raumimpulsantworten von Behältern basieren und die Bestimmung des Füllgrads durch Abgleichen der aktuellen Raumimpulsantwort mittels mehrerer Schätzer erfolgt, die durch Entscheidungsbäume repräsentiert werden;

Anzeigen des Füllgrads an einer Anzeigeeinheit.

Fig. 1

Fig. 2

Fig. 3

Fig. 4

Fig. 5

Europäisches
Patentamt

European
Patent Office

Office européen
des brevets

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2018/044159 A1 (CROUSE KENT ELDON [US] ET AL) 15. Februar 2018 (2018-02-15) <br> * Abbildungen 1, 10B * <br> * Absatz [0095] * <br> * Absatz [0058] * <br> * Absatz [0057] * <br> * Absatz [0048] * <br> * Absatz [0072] - Absatz [0073] * <br> * Absatz [0076] - Absatz [0077] * <br> * Absatz [0037] - Absatz [0038] * <br> - - - - - | 1-15 | INV. <br> G01F23/296 <br> G01F23/2962 <br> G01F23/80 <br> G06N20/00 |
| A | US 2022/299354 A1 (CUNNAH NICHOLAS [GB] ET AL) 22. September 2022 (2022-09-22) <br> * Absatz [0080] * <br> * Absatz [0120] * <br> * Absatz [0101] - Absatz [0103] * <br> - - - - - | 1,5, 8-10,15 | |
| A | WO 2022/233596 A1 (BASF COATINGS GMBH [DE]) 10. November 2022 (2022-11-10) <br> * Seite 20, Zeile 28 - Zeile 33 * <br> - - - - - | 4 | |

RECHERCHIERTE SACHGEBIETE (IPC)

G01F
G06N

Der vorliegende Recherchenbericht wurde für alle Patentansprüche erstellt

| Recherchenort | Abschlußdatum der Recherche | Prüfer |
|---|---|---|
| Den Haag | 8. August 2025 | Régert, Tamás |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
..............................................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 16 7625

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-08-2025

| Im Recherchenbericht angeführtes Patentdokument | Datum der Veröffentlichung | Mitglied(er) der Patentfamilie | Datum der Veröffentlichung |
|---|---|---|---|
| US 2018044159 A1 | 15-02-2018 | KEINE | |
| US 2022299354 A1 | 22-09-2022 | BR 112021026846 A2 | 22-02-2022 |
| | | CN 114258476 A | 29-03-2022 |
| | | EP 3994429 A2 | 11-05-2022 |
| | | GB 2585194 A | 06-01-2021 |
| | | US 2022299354 A1 | 22-09-2022 |
| | | WO 2021001649 A2 | 07-01-2021 |
| WO 2022233596 A1 | 10-11-2022 | CN 117280184 A | 22-12-2023 |
| | | EP 4334687 A1 | 13-03-2024 |
| | | JP 7662831 B2 | 15-04-2025 |
| | | JP 2024521027 A | 28-05-2024 |
| | | US 2024125638 A1 | 18-04-2024 |
| | | WO 2022233596 A1 | 10-11-2022 |

Für nähere Einzelheiten zu diesem Anhang : siehe Amtsblatt des Europäischen Patentamts, Nr.12/82

EPO FORM P0461

## EP 4 628 854 A1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009055262 A1
- WO 2022233596 A1
- US 20220299354 A1

**In der Beschreibung aufgeführte Nicht-Patentliteratur**

- **CETKIN**. Spatial impulse response analysis and ensemble learning for effcient precision level sensing. *Discover Artificial Intelligence*, 26 September 2024, https://doi.org/10.1007/s44163-024-00165-w